# EUROPEAN PATENT SPECIFICATION

(11) **EP 3 646 210 B1**
(45) Date of publication and mention of the grant of the patent: **08.07.2026**
(21) Application number: 18802850.0
(22) Date of filing: 11.05.2018
(51) Int. Cl.: G06F 21/45, G06F 21/64, G06F 21/62, G06Q 40/06

(54) **SYSTEMS AND METHODS FOR TRACKING AND AUTHENTICATING DATA**
SYSTEME UND VERFAHREN ZUM VERFOLGEN UND AUTHENTIFIZIEREN VON DATEN
SYSTÈMES ET PROCÉDÉS DE SUIVI ET D'AUTHENTIFICATION DE DONNÉES

(30) Priority: 15.05.2017 US 201762506367 P
(43) Date of publication of application: 06.05.2020
(73) Proprietor: Guth, Barbara Ann, Boulder, Colorado 80301 (US)
(72) Inventor: BOCK, Joel N., Teaneck, New Jersey 07666 (US); GUTH, Barbara Ann, Boulder, Colorado 80301 (US)
(74) Representative: Dentons Patent Solutions Rechtsanwaltsgesellschaft mbH
(86) International application number: PCT/US2018/032384
(87) International publication number: WO 2018/213132

(56) References cited:
- US-A1- 2007 033 370
- US-A1- 2007 033 370
- US-A1- 2016 012 090
- US-A1- 2016 055 191
- US-A1- 2016 253 677
- US-A1- 2016 253 677
- ANONYMOUS: "Hash function - Wikipedia", 24 March 2017 (2017-03-24), pages 1 - 13, XP093232287, Retrieved from the Internet <URL:https://en.wikipedia.org/w/index.php?title=Hash_function&oldid=771961351>

## Description

### TECHNICAL FIELD

The present disclosure relates to systems and method for tracking and authenticating data.

### BACKGROUND

Data comes in many forms and from many different sources. However, tracking data and authenticating data can be complicated and difficult when the data transfers between user, systems and networks.

The investment sector currently does not provide a means of enabling outside investors to invest in private companies who desire no exit strategy and wish to stay sovereign. There is the rare occasion where 1 -2 individuals can provide the $1 -10mm startup funding; however, this is an exception. All other current investment models and funds insist upon an exit strategy, which does not serve all inventors who wish to retain control of their IP and their company.

The investment sector currently does not provide a means for venture capital or private equity firms or funds (VCs, PEs) to invest in private, sovereign companies that intend to remain sovereign. Again, these firms consistently insist upon an exit strategy to provide investor return, which is often in conflict with inventor goals and desires to stay sovereign.

The investment sector currently does not provide any way for corporations to invest in private companies, and therefore entirely impedes their ability to access private, oftentimes highly disruptive technologies.

Published US patent application US2016253677A1 discloses a platform and method provided for facilitating the trading of fractional ownerships of a digital representation of an asset. In one embodiment, the method includes: identifying an original physical asset for creating a corresponding digital asset; making a digital representation of the original physical asset; authenticating the digital representation; embedding or associating the digital representation with a unique identification code; storing the digital representations on a first non-transitory computer-readable storage medium; and placing the digital representation in a market for trading.

Published US patent application US2007033370A1 discloses a method for continuous data protection in a storage system, including receiving a first write command to write first data to a partition of a logical volume and then generating a first partition descriptor record (PDR) having a first timestamp. The method further includes storing the first data at a first location, associating the first PDR with the first location, and receiving a second write command, subsequent to the first command, to update the first data with second data. Responsively to the second command, a second PDR having a second timestamp is generated. The second data is stored at a second location, and the second PDR is associated with the second location. The method includes generating a pointer between the first PDR and the second PDR, and accessing the first PDR using the pointer in response to a read command indicating a time prior to the second timestamp.

Overall, inventors are generally not prioritized, protected or honored with current investment and VC/PE models. They almost always must eventually sell out or lose their company in order to gain access to initial seed capital or mezzanine level financing. Banks do not fill this void, as their loan parameters often remain untenable for many inventors. The result is an inappropriate and often tragic demand that is inflicted upon inventors, which dishonors us all as it disrespects human creativity at its core.

### SUMMARY

A new entity or tool is called for in the investment industry. The new entity, the Sovereign Revenue Trust Entity (SRTE), will change the above dynamics. This entity provides an alternative to the venture capital (VC) model for inventors, and is needed to enable synergies and mutually beneficial dynamics to occur within our investment and entrepreneurial communities which are currently implausible based on our current structures.

The value of a company is directly reflected in its share price, which is based on the profitability of that company. However, the investment industry has insisted upon only one avenue for offering an ROI for investors, which necessitates the sale of the IP or the company at some future point. If a company's value is determined based on profitability, why must we tie the initial investment to an indicator that is only a mirror of that value, which also necessitates additional negative collateral effects for the inventor. The SRTE can enable investors to directly benefit from profits without a forced sale of the company. The value doesn't change, but suddenly a new opportunity presents itself, and investors, VC's and corporations are enabled to participate in areas and technologies they never could have prior to the creation of the SRTE.

The SRTE entity represents a "special purpose entity/vehicle" and acts as a limited co-founder of the company with exclusive limited negotiated rights to revenue/profit share to its investors, VC's or PE's. In the case of a Corporation, the SRTE will enable corporate investment and negotiated access to use of the private technology, with no access to the IP or ownership of the private company. The SRTE enables the above four scenarios to be resolved, which could never exist if the SRTE was not created. The SRTE acts as a "Chinese Wall", which enables a private company to therefore raise funds, while maintaining its independent sovereignty in all cases

The SRTE also dramatically diminishes potential dilution, or current dilution as investors move from ownership of the company to direct participants in profits created by the technology. Outside investors will suddenly have access to the revenues of a private company they would never have access to under any other circumstance.

Investors gain their return thru a direct share in revenues/profits, verses a merger/acquisition or an IPO. As all share value is ultimately derived from the profitability of a company, sharing directly in profits cuts through the other cumbersome demands that are not necessary for shareholder return.

The SRTE prevents the need for a private company to sell to a larger acquirer and therefore prevents the downstream problem of the "too big to fail" scenario which has led to global financial instability, monopoly and corruption by ending the need to incentivize larger firms to continually purchase smaller firms until only a few giant players remain.

VC's often times cannot invest or do not have the opportunity to invest in private companies. This offers a new investment piece of the pie currently unavailable to VC investors. Investors would incur the same risk as any high-risk investment, but may contribute in a higher return potentiality should the SRTE be well negotiated.

Inventors often resist VC's as they often take a great deal of the ownership of the company to raise the needed funds, and oftentimes avoid VC's, as they are often renowned for negotiating too aggressively for control of the company.

There is no broker dealer dynamic applicable as there are no securities being traded or purchased. If investors want to invest in a private company and negotiate a share in revenues as a partner within the SRTE which is a co-founder of the company, that is their prerogative. Regardless, the SRTE opportunity will honor current Regulation D parameters regarding qualified investors.

This vehicle would provide VC/PE firms and their investors access to invest in heretofore unavailable private companies and technologies.

This would be an additional offering for broker/dealers, VC/PE's to bring their clients to deals they would normally have no access to, if they chose to offer an SRTE to their clients.

This investment structure would contribute to greater global economic stability.

To accomplish the objectives of providing a vehicle for individuals to support the development, deployment, and commercialization of a promising technology, while allowing the innovators continued autonomy in their development, deployment, and commercialization decisions, it is necessary to provide a means to track a level of support to such development, deployment, and commercialization efforts, while isolating such support from control over the entity into which the support is to flow.

Another important factor is ensuring that the value associated with such support and/or the accrual is recognized at a future point in time when the entity into which such support has been provided grows, is revalued, is acquired or raises additional funding.

An important aspect of associating a value to such support is being able to track such value, ensure that such value is recognized and accepted by others, and enabling such value to be fungible, i.e., exchanged, traded, sold, transferred, and passed on to others. To enable such a capability, there must be a method and system for documenting or recognizing such support, or creating an artifact that represents the value of such support. In addition to creating such an artifact, there also must be a method and system for the authentication of such artifact, and a confirmation of value of such artifact.

A method for creating such artifact includes generating a token that represents the support provided. Such support is represented by one or more set of data. For example, the token may be associated with a set of data relating to a point in time when such support was provided and/or with a set of data relating to a level of the support provided. The token may also be associated with a set of data relating to an imputed value of the assets underlying the entity into which the support is being provided. In one or more embodiments, the assets owned by the entity are represented by a first set of data. Other factors or sets of data that may be incorporated into the valuation process include a size of a market associated with the first set of data, a skill set of a management team associated with the first set of data, or a competitive landscape associated with the first set of data.

In one or more embodiments, the SRTE may place certain restrictions on transferring or exchanging the first key or any keys or tokens. For example, one restriction is that the holder of the key or token must return or transfer some of the value received back to the SRTE or the company or parent company. This provides that any accrual in value is recognized as having been accomplished by the hard work of the company or entity and provides additional funding to the company or entity to allow it to continue to grow and succeed.

In one or more embodiments, investment into the SRTE may include corporations or strategic investors. One limitation that may be imposed to ensure that the technology being developed by the company is not improperly used or misappropriated by the corporations or strategic investors is for the agreement to include a penalty for such theft, improper use, or misappropriation, such as, for example, an agreed upon damages multiplier, such as an automatic treble damages or 5x damages award upon a determination of misappropriation.

In one or more embodiments, the investors in the SRTE may trade revenue share or cash flow in the early years of the company's growth for a larger payout in later years. This benefits the company by allowing the company to retain growth capital in its early years when such capital is more expensive, harder to come by and more urgently needed, in exchange for a payout of a larger amount of revenue in later years when the company is less likely to need such capital, or if needed, other sources of capital will be more readily available when the company is in a later stage of operation and growth.

In one or more embodiments, each factor underlying the valuation is automatically assigned a weighting based on an algorithm that automatically factors various objective criteria based on one or more databases or repositories of information. For example, assuming the assets comprise intellectual property rights such as patents, trademarks, and copyrights, the imputed value of those assets may be determined by an algorithm that identifies other patents that cite the patents being valued, or during the prosecution of which the patents being values are cited against such patents. Depending on the size of the entity against whose patent the patents being valued were cited, the number of patents against which the patents being valued were cited, and/or the basis for the citation of the patents being valued, the algorithm sets a value and a weighting relating to such assets. Other valuation techniques can be applied to automatically assign a value and weighting to such assets. For example, the valuation may be based on a selling price of patents covering a similar technology, or based on a damages award in an infringement lawsuit relating to patents or similar patents addressing a similar market or product. It may also be based on a valuation of a company having a similar size or scope of patent portfolio. Another valuation method may be based on the average royalty rates in a particular industry or market or royalty rates paid for similar patents.

In one or more embodiments, the valuation may be based on the current value, future value, projected value, or net present value of one or more asset owned by or controlled by the company. For example, where the assets are real estate or mineral deposits owned by the company, the valuation may be based on the current value of such assets, a future value of such assets at a predetermined point in time, a projected value of such assets or a net present value of such assets.

In other embodiments, the valuation may be based on a value of a product being made, sold, offered for sale, or being developed by the entity, such as, for example, a software application, a pharmaceutical product, a medical device, an electronic device, a telecommunication device, a piece of sports equipment, or some other product. In yet other embodiments, the valuation may be based on a service being provided by the entity or that will be provided by the entity, such as, for example, a SaaS application, a music or video download or streaming service, or a social networking website or community. In still other embodiments, the valuation may be based on advertising sales or revenue, or referral fees, generated by the entity.

In one or more embodiments, the valuation of the entity may be based on a size of a market associated with the first set of data. For example, where the first set of data relates to an anti-lung cancer drug, or drug for treating melanoma developed by the entity, the size of the market may be very large, as compared to an orphan drug, for example, used for treating a rare form of cancer. Another example is where the first set of data corresponds to a telecommunication technology, where the size of the market may be very large. In situations where the market is very large, the valuation would correlate to such market size.

In one or more embodiments, the valuation may be tied to a skill set of a management team associated with the first set of data. For example, where the management team associated with the first set of data or with the entity has been successful with respect to one or more prior entities in which they were involved, or if they successfully sold a prior entity or took an entity public through an IPO, it is likely that the valuation of the new entity would be higher than if the management team was not involved in such activities, or if the entity is the first entrepreneurial project in which the management team is involved.

In one or more embodiments, the valuation may be tied to a competitive landscape associated with the first set of data or with the entity. For example, if there are many competitors in the marketplace for the particular product being offered by the entity, the valuation may be lower as compared to a product for which there are fewer competitors or which the entity can provide at a better quality, lower cost, or with better customer support. Further, to the extent that a risk of defensive litigation arises based on third party intellectual property rights, the valuation may also be reduced

To ensure that the value associated with the token is appropriately determined, an independent determination as to the value of the token is undertaken. This is accomplished by an independent third party determining a value or adjustment of the value of items represented by the various sets of data. When the reassessment of value is completed, the token is regenerated and associated with the adjusted or revised valuation. The reassessment may be based on various criteria determined at the discretion of the independent third party and may be based on objective criteria and/or subjective criteria. The criteria and the adjustment to the valuation is based on one or more algorithms applied by the independent third party.

In one or more embodiments, the token may be generated by applying one or more algorithm to the one or more data set. In one or more other embodiments, the token may be generated by applying one or more algorithm to the type or level of support provided, or to the imputed value of the assets underlying the entity into which the support is being provided. The one or more algorithm may also be applied to the point in time when the support was provided or to the set of data relating to the level of the support provided. In one or more embodiments, the token may be generated by applying one or more algorithms to the first set of data. The one or more algorithm may be an algorithm, such as, for example, a hashing function/algorithm, such as, for example, SHA-2, SHA-3, BLAKE2, ECOH, FSB, GOST, HAS-160, HAVAL, Kupyna, LM hash, MD2, MD4, MD6, MDC-2, N-Hash, RIPEMD, RadioGatún, SWIFFT, Snefru, Streebog, Tiger, VSH, WHIRLPOOL, among others.

After the token is created, the token is uniquely associated with the entity for which support was provided. The token is then isolated from the entity such that the token and the entity or person possessing or associated with the token does not exert any influence over the entity. The goal is to isolate the entity from influence by the person or entity that possesses or that is associated with the token. In one or more embodiments, this isolation includes isolating the person or entity possessing or controlling, or that is associated with the token from the management and direction of the entity. In one or more embodiments, the isolation includes not allowing the token holder to be involved in the development, deployment, and commercialization efforts of the entity.

According to one or more embodiments of a method for authenticating data, a value is assigned to a first set of data at a first point in time, wherein the value is automatically determined based on at least one of an imputed value of a pool of assets associated with the first set of data, a size of a market associated with the first set of data, a skill set of a management team associated with the first set of data, or a competitive landscape associated with the first set of data. The value of the first set of data is adjusted based on an independent third party evaluation at or near the first point in time. A first key is generated using an algorithm that produces a unique identifier from the first set of data, the first point in time, and the adjusted value. A copy of the unique identifier is stored in a first location in a database. The first set of data is stored in a second location in the database. The first point in time is stored in a third location in the database, and the adjusted value is stored in a fourth location in the database. A first pointer that identifies the first location in the database is generated, and the first pointer correlates the first location in the database to the second location in the database. A second pointer that correlates the first location in the database to the third location in the database is also generated, as is a third pointer that correlates the first location in the database to the fourth location in the database. The first key is associated with the first pointer, the second pointer, and the third pointer. The first key is isolated from the first set of data, such that the transfer and/or ownership of the first key does not affect the adjusted value of the first set of data. The first key is transferred to a first user. The first key is authenticated using the first pointer, the second pointer, and the third pointer.

In one or more embodiments, the first pointer is used to locate the unique identifier and the first set of data. In one or more other embodiments, the second pointer is used to locate the unique identifier and the first point in time. In one or more further embodiments, the third pointer is used to locate the unique identifier and the adjusted value.

In one or more embodiments, the adjusted value of the first set of data is further adjusted based on an independent third party evaluation at or near a second point in time. In one or more embodiments, a net present value is transferred to the first user based on the further adjusted value of the first key at or near the second point in time based on an exchange or redemption of the first key by the first user at the second point in time.

In one or more embodiments, a system for authenticating data, comprises a server, including a microprocessor, a memory and a database, wherein a first set of data is stored in the database, and wherein the memory includes instructions that cause the microprocessor to assign a value to the first set of data at a first point in time, wherein the value is automatically determined based on at least one of an imputed value of a pool of assets associated with the first set of data, a size of a market associated with the first set of data, a skill set of a management team associated with the first set of data, or a competitive landscape associated with the first set of data. The microprocessor also adjusts the value of the first set of data based on an independent third party evaluation at or near the first point in time, generates a first key, wherein the first key is generated using an algorithm that produces a unique identifier from the first set of data, the first point in time, and the adjusted value, stores a copy of the unique identifier in a first location in a database, stores the first set of data in a second location in the database, stores the first point in time in a third location in the database, stores the adjusted value in a fourth location in the database. The microprocessor further generates a first pointer that identifies the first location in the database and correlates the first location in the database to the second location in the database, generate a second pointer that correlates the first location in the database to the third location in the database, generate a third pointer that correlates the first location in the database to the fourth location in the database, and associates the first key with the first pointer, the second pointer, and the third pointer. The microprocessor also isolates the first key from the first set of data, such that the transfer and/or ownership of the first key does not affect the adjusted value of the first set of data. The first key is transferred to a first user. The system authenticates the first key using the first pointer, the second pointer, and the third pointer.

### BRIEF DESCRIPTION OF THE DRAWINGS

The set of accompanying illustrative drawings shows various example embodiments of this disclosure. Such drawings are not to be construed as necessarily limiting this disclosure. Like numbers and/or similar numbering scheme can refer to like and/or similar elements throughout.
FIG.1 shows an embodiment of an SRTE structured entity according to the present disclosure.
FIG. 2 shows a method for capital raising according to an embodiment of the present disclosure.
FIG. 3 shows an embodiment of an SRTE structure according to the present disclosure.
FIG. 4 shows another embodiment of an SRTE structure.
FIG. 5 shows a method for authentication of a first key according to an embodiment of the present disclosure.
FIG. 6 shows a system according to an embodiment of the present disclosure.
FIG. 7 shows a method for storing information relating to a first key and isolating the first key according to an embodiment of the present disclosure.
FIG. 8 shows a method for transferring a key according to an embodiment of the present disclosure.

### DETAILED DESCRIPTION

This disclosure is now described more fully with reference to the set of accompanying illustrative drawings, in which example embodiments of this disclosure are shown. This disclosure can be embodied in many different forms and should not be construed as necessarily being limited to the example embodiments disclosed herein. Rather, the example embodiments are provided so that this disclosure is thorough and complete, and fully conveys various concepts of this disclosure to those skilled in a relevant art.

Features described with respect to certain example embodiments can be combined and sub-combined in and/or with various other example embodiments. Also, different aspects and/or elements of example embodiments, as disclosed herein, can be combined and sub-combined in a similar manner as well. Further, some example embodiments, whether individually and/or collectively, can be components of a larger system, wherein other procedures can take precedence over and/or otherwise modify their application. Additionally, a number of steps can be required before, after, and/or concurrently with example embodiments, as disclosed herein. Note that any and/or all methods and/or processes, at least as disclosed herein, can be at least partially performed via at least one entity in any manner.

Various terminology used herein can imply direct or indirect, full or partial, temporary or permanent, action or inaction. For example, when an element is referred to as being "on," "connected" or "coupled" to another element, then the element can be directly on, connected or coupled to the other element and/or intervening elements can be present, including indirect and/or direct variants. In contrast, when an element is referred to as being "directly connected" or "directly coupled" to another element, there are no intervening elements present.

Although the terms first, second, etc. can be used herein to describe various elements, components, regions, layers and/or sections, these elements, components, regions, layers and/or sections should not necessarily be limited by such terms. These terms are used to distinguish one element, component, region, layer or section from another element, component, region, layer or section. Thus, a first element, component, region, layer, or section discussed below could be termed a second element, component, region, layer, or section without departing from various teachings of this disclosure.

Various terminology used herein is for describing particular example embodiments and is not intended to be necessarily limiting of this disclosure. As used herein, various singular forms "a," "an" and "the" are intended to include various plural forms as well, unless a context clearly indicates otherwise. Various terms "comprises," "includes" and/or "comprising," "including" when used in this specification, specify a presence of stated features, integers, steps, operations, elements, and/or components, but do not preclude the presence and/or addition of one or more other features, integers, steps, operations, elements, components, and/or groups thereof.

As used herein, a term "or" is intended to mean an inclusive "or" rather than an exclusive "or." That is, unless specified otherwise, or clear from context, "X employs A or B" is intended to mean any of a set of natural inclusive permutations. That is, if X employs A; X employs B; or X employs both A and B, then "X employs A or B" is satisfied under any of the foregoing instances.

Example embodiments of this disclosure are described herein with reference to illustrations of idealized embodiments (and intermediate structures) of this disclosure. As such, variations from various illustrated shapes as a result, for example, of manufacturing techniques and/or tolerances, are to be expected. Thus, various example embodiments of this disclosure should not be construed as necessarily limited to various particular configurations of systems illustrated herein, but are to include deviations in configuration that result, for example, from selection of components.

Unless otherwise defined, all terms (including technical and scientific terms) used herein have the same meaning as commonly understood by one of ordinary skill in an art to which this disclosure belongs. Various terms, such as those defined in commonly used dictionaries, should be interpreted as having a meaning that is consistent with a meaning in a context of a relevant art and should not be interpreted in an idealized and/or overly formal sense unless expressly so defined herein.

Furthermore, relative terms such as "below," "lower," "above," "upper," "first," "second," and "third" can be used herein to describe one element's relationship to another element as illustrated in the set of accompanying illustrative drawings. Such relative terms are intended to encompass different orientations of illustrated technologies in addition to an orientation depicted in the set of accompanying illustrative drawings. For example, if a device in the set of accompanying illustrative drawings were turned over, then various elements described as being on a "lower" side of other elements would then be oriented on "upper" sides of other elements. Similarly, if a device in one of illustrative figures were turned over, then various elements described as "below" or "beneath" other elements would then be oriented "above" other elements. Therefore, various example terms "below" and "lower" can encompass both an orientation of above and below.

As used herein, a term "about" and/or "substantially" refers to a +/- 10% variation from a nominal value/term. Such variation is always included in any given value/term provided herein, whether or not such variation is specifically referred thereto.

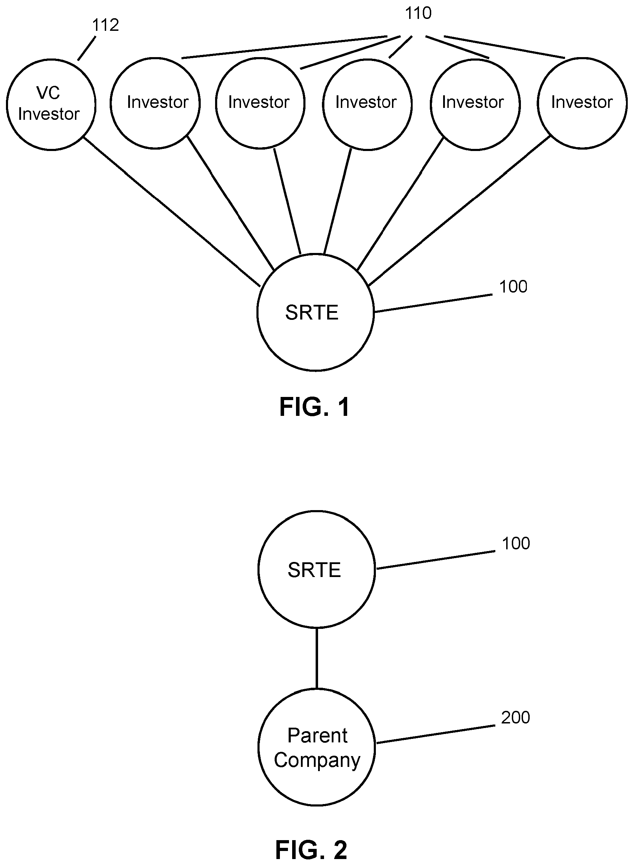

As shown in FIG. 1, the SRTE 100 can have one or more investors 110 that contribute funds to the SRTE 100 which are allocated to investments in one or more companies that are trying to develop technology, products or services while avoiding a transfer of control or distractions caused by such investors 110 attempting to direct the activities of the one or more companies. In one or more embodiments, in addition to or in place of an investor and venture firm or private equity firm 112 may invest in the SRTE 100

As shown in FIG.2, the structure depicts a simple method for a company having no divisions to raise capital for its business needs. In one embodiment, the parent company 200 may directly contract with an SRTE 100 via a founder or co-founder of the company, and investors can be allowed to invest in the SRTE 100 such that they can benefit with respect to the parent company 200 via a direct revenue share corresponding to the size of their investment in the SRTE 100. This direct revenue share will allow the investor to benefit alongside an inventor of the technology being developed and/or sold by the parent company 200 and the founder and/or co-founder.

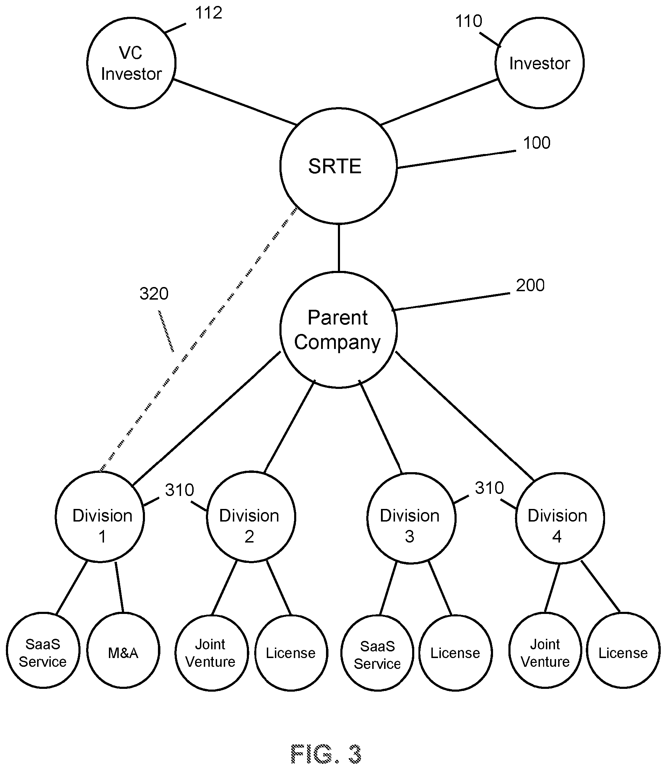

As shown in FIG. 3, a structure of a parent company 200 and its various divisions 310 may be arranged such that the SRTE fits within the structure thereby providing for the SRTE to share in the revenues generated by the various divisions without any bypass of the SRTE. This provides security and protection for the investors 110 in the SRTE 100, or for the venture or private equity firm 112 that invested in the SRTE 100, to ensure that they are being appropriately compensated, or appropriately sharing in the revenues generated by such commercialization activities, as per the contractual arrangement with the parent company 200. One or more of the divisions 310 of the parent company 200 that are depicted in FIG. 3 may generate revenues for the parent company 200 and the SRTE 100 through licensing arrangements with the parent company 200 and/or through one or more licensing arrangements with one or more customers. Additionally or alternatively, revenues may be generated by the one or more divisions 310 through one or more joint ventures, sales, services, acquisitions, and/or divestitures. The proper functioning of the SRTE 100 structure is dependent on limiting the ability to interfere with commercialization and monetization of, and limiting third party rights to, the parent company assets, including the parent company technology and intellectual property rights. The ability to control such commercialization and the assets are limited to the parent company 200. The parent company 200 may allow one or more divisions 310 of the parent company 200 to become involved in such commercialization/monetization; provided that an agreement is entered into that limits the rights of the division 310, such as, for example, through one or more commercialization agreements. This limitation on rights between the parent company 200 and the one or more divisions 310 protects the investors 110 in the SRTE 100 and ensures that the investors 110 and/or venture or private equity firm 112 have a comfort level such that they are willing to invest in the SRTE 100 and support the parent company 200 through the SRTE 100 and this structure.

In one or more embodiments, the contractual arrangement between the parent company 200 and the SRTE 100 requires that the SRTE 100 be listed as a beneficiary in some or all of the agreements entered into by the parent company 200. In such a situation, that relationship is depicted in Fig. 3 by the dotted line 320 extending from the division 310 to the SRTE 100.

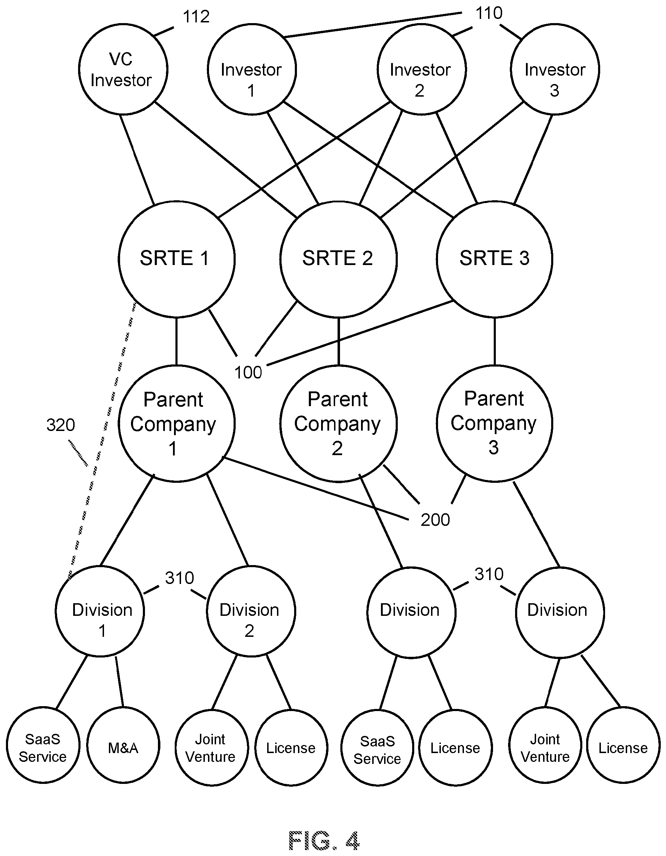

In one or more embodiments, as shown in FIG. 4, a structure of investments in multiple SRTEs 100 by various investors 110 can be arranged with each SRTE 100 corresponding to only a single parent company 200. For example, SRTE 1 invests in parent company 1. There are no other SRTEs that invest into parent company 1 and SRTE 1 only invests into a single parent company. The same holds true for SRTE 2 and parent company 2, and SRTE 3 and parent company 3. Each of the divisions 310 of parent company 1, i.e., division 1 and division 2, is arranged such that parent company 1 directly contracts with division 1 and division 2 and all revenues generated by division 1 and division 2 are transferred up to parent company 1, from where it is shared with SRTE1 pursuant to the terms of the revenue sharing agreement entered into by parent company 1 and SRTE 1. This structure provides for isolation of the SRTEs 100 and the investors 110 and venture or private equity fund 112 from control over the parent company 200 and the assets of the parent company 200, while also protecting the investors 110 and venture and private equity fund 112 by ensuring that there is no competing interest for revenue share from monetization or commercialization of the parent company's 200 assets or intellectual property. This provides security and protection for the investors 110 in the SRTE 100, including the venture capital and/or private equity fund 112, to ensure that they are being appropriately compensated, or appropriately sharing in the revenues generated by such commercialization activities, as per the contractual arrangement with the parent company 200. One or more of the divisions 310 of the parent companies 200 that are depicted in FIG. 4 may generate revenues for the parent company 200, the SRTE 100, the investor 110 and/or the venture and/or private equity fund 112, according to the contractual arrangement in place, through licensing arrangements with the parent company 200 and/or through one or more licensing arrangements with one or more customers. Additionally or alternatively, revenues may be generated by the one or more divisions 310 through one or more joint ventures, sales, services, mergers, acquisitions, and/or divestitures. The proper functioning of the SRTE 100 structure is dependent on limiting the ability to commercialize and monetize, and the rights to, the parent company assets, including the parent company technology and intellectual property rights, to the one or more divisions 310. This limitation on rights between the parent company 200 and the one or more divisions 310 protects the investors 110 in the SRTE 100 and the venture and/or private equity fund 112 and ensures that the investors 110 and the venture and/or private equity fund 112 have a comfort level such that they are willing to invest in the SRTE 100 and support the parent company 200 through the SRTE 100 and this structure.

In one or more embodiments, the contractual arrangement between the parent company 200 and the SRTE 100 requires that the SRTE 100 be listed as a beneficiary in some or all of the agreements entered into by the parent company 200. In such a situation, that relationship is depicted in Fig. 4 by the dotted line 320 extending from the division 310 to the SRTE 100.

To remain attractive any investment vehicle must be fungible, including for purposes of exchanging, trading, or selling an investment, it must be traceable, and it must have some recognized and accepted value, or recognized as representing a value. In addition the investment vehicle should be manageable, traceable and authenticatable over time. This is particularly true in situations where the SRTE's goal is to generate interest in investing in the success of the parent company.

To remain attractive, the revenue share offered and distributed by the SRTE must, therefore, correlate to some imputed value that remains traceable over time and that can be authenticated. It also must retain its value assuming the revenues attributable to the assets continue to be generated. To remain viable, the SRTE must generate or issue some representation of value attributable to each investor in the SRTE based on the level of their investments in the SRTE. To retain its value and attain acceptance in the marketplace, the representation of value must also be authenticatable and traceable in order to support a secondary market for the representation of value.

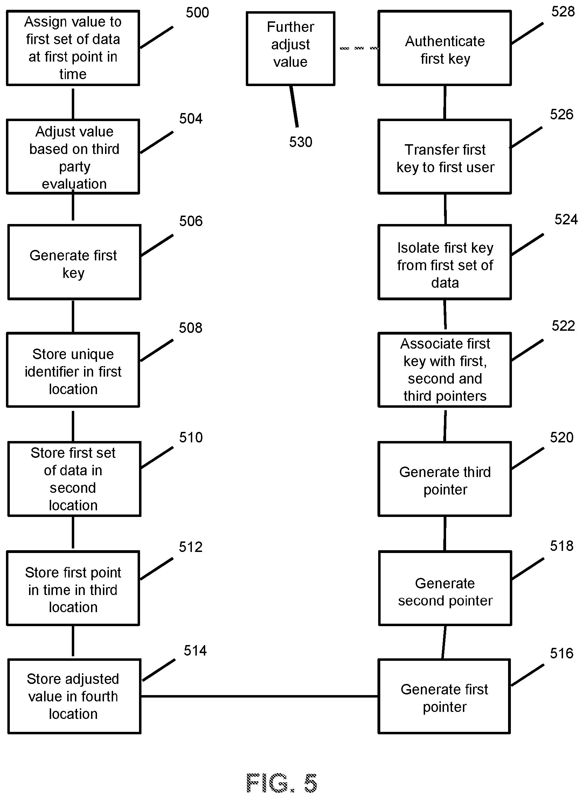

As shown in FIG. 5, a method for authenticating the representation of value of the SRTE is described. In step 500, a first set of data associated with a pool of assets that represent the value of the company is assigned a value at a first point in time. The value is automatically determined based on at least one of an imputed value of the pool of assets, a size of a market associate with the first set of data, a skill set of a management team associated with the first set of data, or a competitive landscape associated with the first set of data, or any combination of the foregoing. As discussed above such value may be determined based on the types of asset that represent the pool of assets and/or various factors relating to such pool of assets, such as, for example, the existence or enforceability of the assets where the assets represent intellectual property rights, rights in content or software, or real estate. In step 504, the value of the first set of data is adjusted based on an independent third party evaluation. This third party evaluation may be accomplished at or near the first point in time, or at a later point in time. An advantage of undertaking the third party evaluation near the first point in time is to validate the underlying valuation based on similar facts which is more likely to be the case when the valuation and evaluation are accomplished close to each other in time. In one or more embodiments, the evaluation results in no adjustment to the value of the first set of data, but instead, validates the underlying valuation.

When the valuation and evaluation are completed, in step 506, a first key is generated. In one or more embodiment, the first key is generated using an algorithm that produces a unique identifier from the first set of data, the first point in time, and the adjusted value. In step 508, a copy of the unique identifier is stored in a first location in a database. The database is described further below with respect to the system. In step 510, the first set of data is stored in a second location in the database. Alternatively, the first set of data may be stored in a second database that is independent of the first database. In step 512, the first point in time is stored in a third location in the database. Alternatively, the first point in time may be stored in a second or third database. In step 514, the adjusted value is stored in a fourth location in the database. Alternatively, the adjusted value may be stored in a second, third or fourth database.

After these various items are stored in one or more databases, in step 516, a first pointer is generated. The first pointer identifies the first location in the database and correlates the first location in the database to the second location in the database. Alternatively, the first pointer identifies the first location in the first database and correlates the first location in the first database to the second location in the second database. In step 518, a second pointer is generated. The second pointer correlates the first location in the database to the third location in the database. Alternatively, the second pointer correlates the first location in the first database to the third location in the third database or some other database. In step 520, a third pointer is generated. The third pointer correlates the first location in the database to the fourth location in the database. Alternatively, the third pointer correlates the first location in the first database to the fourth location in the fourth database or some other database. After generation of the first pointer, the second pointer and the third pointer, in step 522, the first key is associated with the first pointer, the second pointer, and the third pointer.

In order to maintain the independence of the parent company from the SRTE, the representation of value that is associated with the assets of the parent company should relate to the SRTE but should be isolated from the parent company. This is accomplished in step 524, where the first key is isolated from the first set of data. The isolation is accomplished such that the transfer or ownership of the first key does not affect the adjusted value of the first set of data. In step 526, the first key is transferred to a first user. The first key allows the first user to maintain an interest in the SRTE that is isolated from the parent company.

In step 528, the first key is authenticated. This authentication is accomplished using the first pointer, the second pointer, and the third pointer. The authentication allows the first user to derive a return or value from the retention or ownership of the first key and the initial investment in the SRTE that is associated with the parent company and the revenue stream generated by the assets owned by the parent company.

In one or more embodiments, the first pointer is used to locate the unique identifier and the first set of data. In one or more embodiments, the second pointer is used to locate the unique identifier and the first point in time. In one or more embodiments, the third pointer is used to locate the unique identifier and the adjusted value.

In one or more embodiments, in step 530 the adjusted value of the first set of data is further adjusted based on an independent third party evaluation at or near a second point in time. In one or more embodiments, a net present value of the first key is transferred to the first user in exchange for or redemption of the first key by the first user at the second point in time based on the further adjusted value of the first set of data at or near the second point in time.

In one or more embodiments, the pool of assets that are represented by the first set of data include an intellectual property portfolio.

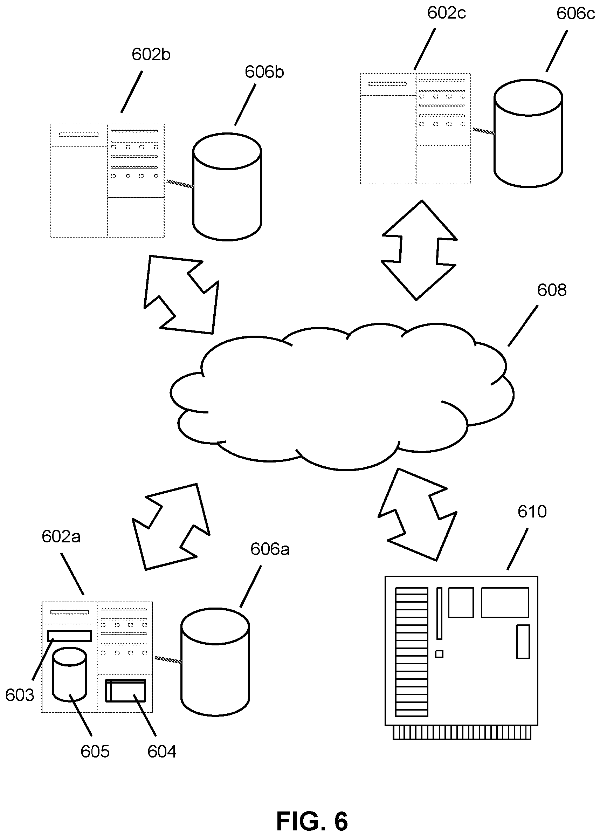

A system according one or more embodiments is shown in FIG. 6. The system comprises a server 602a. The server 602a includes a microprocessor 603 and a memory 604. In one or more embodiments the server 602a also includes a database 605. In one or more embodiments, the database 606a is separate from the server. The server 602a communicates with other servers 602b, 602c via a network 608. The network 608 may be a wired network or a wireless network. Data is stored by the server 602a as structured data or unstructured data in database 605 or database 606a. The other servers 602b, 602c also store data, either structured or unstructured, in internal databases or in databases 606b, 606c.

The server 602a can be hardware-based and/or software-based. The server 602a is and/or is hosted on, whether directly and/or indirectly, a server computer, whether stationary or mobile, such as a workstation, a desktop, a laptop, a tablet, a mainframe, a supercomputer, a server farm, and so forth. The server computer can be touchscreen enabled and/or non-touchscreen enabled. The server computer can include and/or be a part of another computer system and/or a cloud computing network. The server computer can run any type of operating system (OS), such as iOS^{®}, Windows^{®}, Android^{®}, Unix^{®}, Linux^{®} and/or others. The server computer can include and/or be coupled to, whether directly and/or indirectly, an input device, such as a mouse, a keyboard, a camera, whether forward-facing and/or back-facing, a touchscreen, a biometric reader, a clicker, and/or a microphone. The server computer can include and/or be coupled to, whether directly and/or indirectly, an output device, such as a display, a speaker, a headphone, and/or a printer. In some embodiments, the input device and the output device can be embodied in one unit. The server computer can include circuitry for global positioning determination, such as via a global positioning system (GPS), a signal triangulation system, and so forth. The server computer can be equipped with near-field-communication (NFC) circuitry. The server computer can host, run, and/or be coupled to, whether directly and/or indirectly, database 605 or database 606a, such as a relational database or a non-relational database, which can feed data to the server 602a, whether directly and/or indirectly.

Network 608 may be any size network and may include a plurality of nodes, such as a collection of computers and/or other hardware interconnected via a plurality of communication channels, which allow for sharing of resources and/or information. Such interconnection can be direct and/or indirect. Network 608 can be wired and/or wireless. The network 608 can allow for communication over short and/or long distances, whether encrypted and/or unencrypted. The network 608 can operate via at least one network protocol, such as Ethernet, a Transmission Control Protocol (TCP)/Internet Protocol (IP), and so forth. The network 608 can have any scale, such as a personal area network, a local area network, a home area network, a storage area network, a campus area network, a backbone network, a metropolitan area network, a wide area network, an enterprise private network, a virtual private network, a virtual network, a satellite network, a computer cloud network, an internetwork, a cellular network, and so forth. The network 608 can be and/or include an intranet and/or an extranet. The network 608 can be and/or include Internet. The network 608 can include other networks and/or allow for communication with other networks, whether sub-networks and/or distinct networks, whether identical and/or different from the network 608. The network 608 can include hardware, such as a computer, a network interface card, a repeater, a hub, a bridge, a switch, an extender, and/or a firewall, whether hardware based and/or software based. The network 608 can be operated, directly and/or indirectly, by and/or on behalf of one and/or more entities, irrespective of any relation to contents of the present disclosure.

In one or more embodiments, server 602a and the client on server 602a, via the microprocessor 603, a transmitter, transceiver, and/or communication port, may be in communication with network 608, such as directly and/or indirectly, selectively and/or unselectively, encrypted and/or unencrypted, wired and/or wireless, via contact and/or contactless. Such communication can be via a software application, a software module, a mobile app, a browser, a browser extension, an OS, and/or any combination thereof. For example, such communication can be via a common framework/API, such as HTTPS.

The database 605 or 606a stores a first set of data. The memory 604 includes instructions that cause the microprocessor 603 to take certain actions. The microprocessor 603 assigns a value to the first set of data at a first point in time, wherein the value is automatically determined based on at least one of an imputed value of a pool of assets associated with the first set of data, a size of a market associated with the first set of data, a skill set of a management team associated with the first set of data, or a competitive landscape associated with the first set of data. The value of the first set of data is adjusted based on an independent third party evaluation at or near the first point in time.

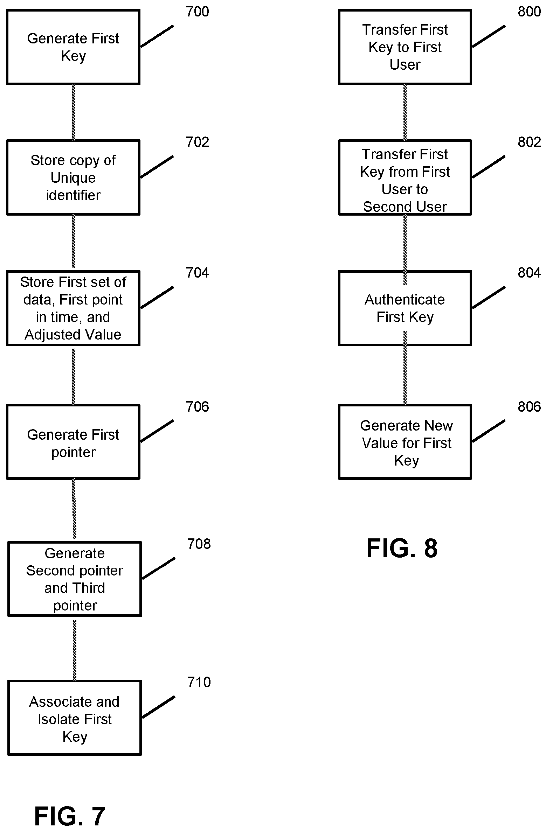

Looking now at FIG. 7, at step 700, the microprocessor generates a first key using an algorithm that produces a unique identifier from the first set of data, the first point in time, and the adjusted value. For example, the first key may be generated using an algorithm, such as, for example, a hashing function/algorithm. The hashing function/algorithm may comprise, such as, for example, SHA-2, SHA-3, BLAKE2, ECOH, FSB, GOST, HAS-160, HAVAL, Kupyna, LM hash, MD2, MD4, MD6, MDC-2, N-Hash, RIPEMD, RadioGatún, SWIFFT, Snefru, Streebog, Tiger, VSH, WHIRLPOOL, among others.

Upon generation of the first key, the microprocessor 603, at step 702, stores a copy of the unique identifier in a first location in the database 605 or database 606a. At step 704, the microprocessor 603 also stores the first set of data in a second location in the database 605 or database 606a, the first point in time in a third location in the database 605 or database 606a, and the adjusted value in a fourth location in the database 605 or database 606a. To ensure that the first set of data, the first point in time, and the adjusted value will be locatable and correlated one to the other, in step 706, the microprocessor 603 generates a first pointer that identifies the first location in the database 605 or database 606a, and correlates the first location in the database 605 or database 606a to the second location in the database 605 or database 606a. In step 708, the microprocessor 603 also generates a second pointer that correlates the first location in the database 605 or database 606a to the third location in the database 605 or database 606a, and generates a third pointer that correlates the first location in the database 605 or database 606a to the fourth location in the database 605 or database 606a. The microprocessor 603 further associates the first key with the first pointer, the second pointer, and the third pointer, in step 710, and isolates the first key from the first set of data, such that the transfer and/or ownership of the first key does not affect the adjusted value of the first set of data.

Looking now at FIG. 8, once the first key is generated and processed by the system, in step 800, the first key may be transferred to a first user. The first user may retain the key or may transfer the key to another user or entity. In step 802, when the first key is transferred to a different user or entity, at some point in time the other user or entity may want to derive value from the first key. This can be accomplished by selling the first key, trading the first key, bartering the first key, gifting the first key, transferring the first key, or redeeming the first key. To ensure that the first key represents and is associated with the value that the first user is seeking to derive from the first key, in step 804, the first key must first be authenticated.

According to one or more embodiments, the first key is authenticated using the first pointer, the second pointer, and the third pointer. Each of the first pointer, the second pointer, and the third pointer that were generated by the microprocessor 603 and retained by the system are recalled and used to locate the unique identifier and the first set of data associated with the unique identifier, the first point in time associated with the first set of data, and the adjusted value associated with the first point in time.

Once the authentication is complete, the transaction involving the first key will be a trusted transaction as other users will be able to associate the first set of data, which represents certain assets of the company, with the adjusted value at the first point in time. Based on that adjusted value and the first set of data, at step 806, a new value will be able to be generated such that a new value will be associated with the first key at the second point in time, i.e., at the time of the transaction involving the first key.

For example, the first set of data may represent a particular revenue stream or percentage of revenue generated by the parent company or by certain assets of the parent company. The first set of data may also represent a particular adjusted value associated therewith at a first point in time, such as, for example, at the time that the agreement providing for the particular revenue stream or percentage of revenue generated by the parent company is concluded by the parent company and the SRTE. At the second point in time, for example, when the first key is being transferred, the first set of data may represent a new value greater than the adjusted value associated with the first set of data at the first point in time. This may be the case where, for example, the revenues generated by the parent company are in excess of the amounts contemplated or projected at the first point in time. In such a situation, the first key may have a greater value at the second point in time.

In one or more embodiments, the system includes a plurality of servers, including, for example, servers 602a, 602b, and 602c. Each of the servers generates keys associated with sets of data relating to a parent company, such as, for example, parent company 1, parent company 2, and parent company 3. In this embodiment, SRTE 1 is associated with parent company 1 and server 602a; SRTE 2 is associated with parent company 2 and server 602b; and SRTE 3 is associated with parent company 3 and server 602c, as depicted in FIGS. 4 and 6. Server 602a generates a first key, server 602b generates a second key, and server 602c generates a third key. The first key represents a share in SRTE1 and the value derived from or associated with parent company 1. The second key represents a share in SRTE 2 and the value derived from or associated with parent company 2. The third key represents a share in SRTE 3 and the value derived from or associated with parent company 3.

Each of the first key, the second key and the third key are transmitted to a server 610, which is controlled and managed by one or more exchanges. The server 610 provides for the trading or exchange of keys, including the first key, the second key, and the third key. Keys may be exchanged and the differences in values between the keys may be maintained in a ledger system or covered by a transfer of value in some other form, such as financial products, commodities, assets, real estate, cash, futures, services, or some other form of value. The value associated with each key is accepted by the server 610 based on the authentication of the key as described above. The authentication of a key may be accomplished by the server 610, through certain access privileges to the server associated with the key. For example, to authenticate the first key, server 602a allows server 620 to access the database 605 or database 606a and the first pointer, second pointer and third pointer, such that the server 610 may identify the first set of data, the adjusted value, and the first point in time. Server 610 will use this information to authenticate the first key and to determine the value associated with the first key at the first point in time. Server 610 will perform a similar process with respect to the second key and server 602b, and with respect to the third key and server 602c. Once server 610 authenticates each of the keys, it will allow transactions relating to exchanges between key holders.

The creation of the exchange will provide for the fungibility of the keys and allow them to be considered valuable and freely transferrable assets. In this example, a value associated with each key can be used to assist in determining what would be acceptable to exchange for that key. If the first key has a value of 10 and the second key has a value of 5, the first key may be converted to two first sub keys, each having a value of 5 and then one of the fist keys may be exchanged for the second key. The first user who controls the first sub keys would transfer one of the first sub keys to the second user. The second user would transfer the second key to the first user. The system would then create a new association for the first sub key that was transferred to the second user and second key that was transferred to the first user. The databases would be updated, as would be the pointers and this would complete the transaction.

In some embodiments, various functions or acts can take place at a given location and/or in connection with the operation of one or more apparatuses or systems. In some embodiments, a portion of a given function or act can be performed at a first device or location, and a remainder of the function or act can be performed at one or more additional devices or locations.

The corresponding structures, materials, acts, and equivalents of all means or step plus function elements in the claims below are intended to include any structure, material, or act for performing the function in combination with other claimed elements as specifically claimed. The embodiments were chosen and described in order to best explain the principles of the disclosure and the practical application, and to enable others of ordinary skill in the art to understand the disclosure for various embodiments with various modifications as are suited to the particular use contemplated.

The diagrams depicted herein are illustrative. There can be many variations to the diagram or the steps (or operations) described therein without departing from the disclosure. For instance, the steps can be performed in a differing order or steps can be added, deleted or modified. All of these variations are considered a part of the disclosure. It will be understood that those skilled in the art, both now and in the future, can make various improvements and enhancements which fall within the scope of the claims which follow.

## Claims

1. A method, comprising:
assigning (500) a value to a first token representing a first digital data at a first point in time, via a processor, wherein the value is automatically determined based on a first subjective weighting of at least two of a second digital data representing a pool of assets comprising the first digital data, a second subjective weighting of a third digital data representing a size of a market comprising the first digital data, a third subjective weighting of a fourth digital data associated with a skill set of a management team associated with the first digital data, or a fourth subjective weighting of a fifth digital data associated with a competitive landscape associated with the first digital data;
adjusting (504) the value of the first token based on a modification of at least one of the first subjective weighting, the second subjective weighting, the third subjective weighting, or the fourth subjective weighting at or near the first point in time;
generating (506) via the processor, a first digital key that represents a sixth digital data, wherein the first digital key is generated using an algorithm that produces the sixth digital data from the first digital data, the first point in time, and the adjusted value of the first token, wherein the first digital key includes an association with a first pointer, a second pointer, and a third pointer, and wherein the first digital key is isolated from the first token, such that a digital transfer or a digital ownership of the first digital key does not affect the adjusted value of the first token;
storing (508) a copy of the sixth digital data in a first location in a database, such that the copy of the sixth digital data may be retrieved from the first location in the database together with a copy of the first digital data, the first point in time, and the adjusted value of the first token based on the first pointer, the second pointer and the third pointer being generated;
storing (510) a copy of the first digital data in the second location in the database;
storing (512) the first point in time in a third location in the database;
storing (514) the adjusted value of the first token in a fourth location in the database;
generating (516), via the processor, the first pointer, wherein the first pointer identifies the first location in the database and correlates the first location in the database to the second location in the database;
generating (518), via the processor, the second pointer, wherein the second pointer correlates the first location in the database to the third location in the database;
generating (520), via the processor, the third pointer, wherein the third pointer correlates the first location in the database to the fourth location in the database;
verifying (528) the authenticity of the first digital key using the copy of the sixth digital data, the copy of the first digital data, the first point in time, and the adjusted value of the first token; and
controlling (526) the transfer of the first digital key and the copy of the first digital data to a first user.

2. The method of claim 1, wherein the first pointer is used to locate the sixth digital data and the first digital data.

3. The method of one of claims 1 -2, wherein the second pointer is used to locate the sixth digital data and the first point in time.

4. The method of one of claims 1 -3, wherein the third pointer is used to locate the sixth digital data and the adjusted value of the first token.

5. The method of one of claims 1 -4, further comprising further adjusting the value of the adjusted first token based on a modification of at least one of the first subjective weighting, the second subjective weighting, the third subjective weighting, or the fourth subjective weighting at or near a second point in time.

6. The method of claim 5, further comprising transferring a net present value to the first user based on the further adjusted value of the first token at or near the second point in time based on an exchange or redemption of the first digital key by the first user at the second point in time.

7. The method of one of claims 1 -6, wherein the pool of assets includes an intellectual property portfolio.

8. A system, comprising:
a server, including a microprocessor, a memory and a database, wherein a first digital data is stored in the database, and wherein the memory includes instructions that cause the microprocessor to:
assign a value to a first token representing the first digital data at a first point in time, wherein the value is automatically determined based on a first subjective weighting of at least two of a second digital data representing a pool of assets comprising the first digital data, a second subjective weighting of a third digital data representing size of a market comprising the first digital data, a third subjective weighting of a fourth digital data representing a skill set of a management team associated with the first digital data, or a fourth subjective weighting of a fifth digital data associated with a competitive landscape associated with the first digital data;
adjust the value of the first token based on a modification of at least one of the first subjective weighting, the second subjective weighting, the third subjective weighting, or the fourth subjective weighting at or near the first point in time;
generate a first digital key, wherein the first digital key is generated using an algorithm that produces a sixth digital data from the first digital data, the first point in time, and the adjusted value of the first token, and wherein the first digital key includes an association with a first pointer, a second pointer, and a third pointer, and wherein the first digital key is isolated from the first token, such that a digital transfer or a digital ownership of the first digital key does not affect the adjusted value of the first token;
store a copy of the sixth digital data in a first location in a database, such that the copy of the sixth digital data may be retrieved from the first location in the database together with a copy of the first digital data, the first point in time, and the adjusted value of first token based on the first pointer, the second pointer and the third pointer being generated;
store a copy of the first digital data in the second location in the database;
store the first point in time in a third location in the database;
store the adjusted value of first token in a fourth location in the database;
generate the first pointer, wherein the first pointer identifies the first location in the database and correlates the first location in the database to the second location in the database;
generate the second pointer, wherein the second pointer correlates the first location in the database to the third location in the database;
generate the third pointer, wherein the third pointer correlates the first location in the database to the fourth location in the database;
verify the authenticity of the first digital key using the copy of the sixth digital data, the copy of the first digital data, the first point in time, and the adjusted value of the first token; and
controlling the transfer of the first digital key and the copy of the first digital data to a first user.

9. The system of claim 8, wherein the first pointer is used to locate the sixth digital data and the first digital data.

10. The system of one of claims 8-9, wherein the second pointer is used to locate the sixth digital data and the first point in time.

11. The system of one of claims 8-10, wherein the third pointer is used to locate the sixth digital data and the adjusted value of the first token.

12. The system of one of claims 8-11 , further comprising further adjusting the value of the adjusted first token based on a modification of at least one of the first subjective weighting, the second subjective weighting, the third subjective weighting, or the fourth subjective weighting at or near a second point in time.

13. The system of claim 12, further comprising transferring a net present value based on the further adjusted value of the adjusted first token at or near the second point in time based on an exchange or redemption of the first digital key by the first user at the second point in time.

14. The system of one of claims 8-13, wherein the pool of assets includes an intellectual property portfolio.

## Patentansprüche

1. Verfahren, umfassend:
Zuweisen (500) eines Wertes zu einem ersten Token, der erste digitale Daten zu einem ersten Zeitpunkt darstellt, über einen Prozessor, wobei der Wert automatisch basierend auf einer ersten subjektiven Gewichtung von mindestens zwei von zweiten digitalen Daten, die einen Pool von Vermögenswerten darstellen, die die ersten digitalen Daten umfassen, einer zweiten subjektiven Gewichtung von dritten digitalen Daten, die eine Größe eines Marktes darstellen, der die ersten digitalen Daten umfasst, einer dritten subjektiven Gewichtung von vierten digitalen Daten, die einem Fähigkeitenprofil eines Managementteams zugeordnet sind, das den ersten digitalen Daten zugeordnet ist, oder einer vierten subjektiven Gewichtung von fünften digitalen Daten, die einem Wettbewerbsumfeld zugeordnet sind, das den ersten digitalen Daten zugeordnet ist, bestimmt wird;
Anpassen (504) des Wertes des ersten Tokens basierend auf einer Änderung von mindestens einer der ersten subjektiven Gewichtung, der zweiten subjektiven Gewichtung, der dritten subjektiven Gewichtung oder der vierten subjektiven Gewichtung zum oder nahe dem ersten Zeitpunkt;
Erzeugen (506), über den Prozessor, eines ersten digitalen Schlüssels, der sechste digitale Daten darstellt, wobei der erste digitale Schlüssel unter Verwendung eines Algorithmus erzeugt wird, der die sechsten digitalen Daten aus den ersten digitalen Daten, dem ersten Zeitpunkt und dem angepassten Wert des ersten Tokens herstellt, wobei der erste digitale Schlüssel eine Zuordnung zu einem ersten Zeiger, einem zweiten Zeiger und einem dritten Zeiger einschließt, und wobei der erste digitale Schlüssel vom ersten Token isoliert ist, sodass eine digitale Übertragung oder ein digitaler Besitz des ersten digitalen Schlüssels den angepassten Wert des ersten Tokens nicht beeinflusst;
Speichern (508) einer Kopie der sechsten digitalen Daten an einem ersten Speicherort in einer Datenbank, sodass die Kopie der sechsten digitalen Daten zusammen mit einer Kopie der ersten digitalen Daten, dem ersten Zeitpunkt und dem angepassten Wert des ersten Tokens basierend auf dem ersten Zeiger, dem zweiten Zeiger und dem dritten Zeiger vom ersten Speicherort in der Datenbank abgerufen werden kann;
Speichern (510) einer Kopie der ersten digitalen Daten am zweiten Speicherort in der Datenbank;
Speichern (512) des ersten Zeitpunkts an einem dritten Speicherort in der Datenbank;
Speichern (514) des angepassten Werts des ersten Tokens an einem vierten Speicherort in der Datenbank;
Erzeugen (516), über den Prozessor, des ersten Zeigers, wobei der erste Zeiger den ersten Speicherort in der Datenbank identifiziert und den ersten Speicherort in der Datenbank mit dem zweiten Speicherort in der Datenbank korreliert;
Erzeugen (518), über den Prozessor, des zweiten Zeigers, wobei der zweite Zeiger den ersten Speicherort in der Datenbank mit dem dritten Speicherort in der Datenbank korreliert;
Erzeugen (520), über den Prozessor, des dritten Zeigers, wobei der dritte Zeiger den ersten Speicherort in der Datenbank mit dem vierten Speicherort in der Datenbank korreliert;
Überprüfen (528) der Echtheit des ersten digitalen Schlüssels unter Verwendung der Kopie der sechsten digitalen Daten, der Kopie der ersten digitalen Daten, des ersten Zeitpunkts und des angepassten Werts des ersten Tokens; und
Steuern (526) der Übertragung des ersten digitalen Schlüssels und der Kopie der ersten digitalen Daten an einen ersten Benutzer.

2. Verfahren nach Anspruch 1, wobei der erste Zeiger dazu verwendet wird, die sechsten digitalen Daten und die ersten digitalen Daten zu lokalisieren.

3. Verfahren nach Anspruch 1-2, wobei der zweite Zeiger dazu verwendet wird, die sechsten digitalen Daten und den ersten Zeitpunkt zu lokalisieren.

4. Verfahren nach Anspruch 1-3, wobei der dritte Zeiger dazu verwendet wird, die sechsten digitalen Daten und den angepassten Wert des ersten Tokens zu lokalisieren.

5. Verfahren nach einem der Ansprüche 1-4, weiter umfassend weiteres Anpassen des Wertes des angepassten ersten Tokens basierend auf einer Änderung mindestens einer der ersten subjektiven Gewichtung, der zweiten subjektiven Gewichtung, der dritten subjektiven Gewichtung oder der vierten subjektiven Gewichtung zu oder nahe einem zweiten Zeitpunkt.

6. Verfahren nach Anspruch 5, weiter umfassend Übertragen eines Nettobarwerts an den ersten Benutzer basierend auf dem weiter angepassten Wert des ersten Tokens zum oder nahe dem zweiten Zeitpunkt basierend auf einem Austausch oder einer Einlösung des ersten digitalen Schlüssels durch den ersten Benutzer zum zweiten Zeitpunkt.

7. Verfahren nach einem der Ansprüche 1-6, wobei der Pool von Vermögenswerten ein Portfolio an geistigem Eigentum einschließt.

8. System, umfassend:
einen Server, der einen Mikroprozessor, einen Speicher und eine Datenbank einschließt, wobei erste digitale Daten in der Datenbank gespeichert sind, und wobei der Speicher Anweisungen einschließt, die den Mikroprozessor veranlassen zum:
Zuweisen eines Wertes zu einem ersten Token, der die ersten digitalen Daten zu einem ersten Zeitpunkt darstellt, wobei der Wert basierend auf einer ersten subjektiven Gewichtung von mindestens zwei von zweiten digitalen Daten, die einen Pool von Vermögenswerten darstellen, die die ersten digitalen Daten umfassen, einer zweiten subjektiven Gewichtung von dritten digitalen Daten, die Größe eines Marktes darstellen, der die ersten digitalen Daten umfasst, einer dritten subjektiven Gewichtung von vierten digitalen Daten, die einen Fähigkeitenprofil eines Managementteams darstellen, das den ersten digitalen Daten zugeordnet ist, oder einer vierten subjektiven Gewichtung von fünften digitalen Daten, die einem Wettbewerbsumfeld zugeordnet sind, das den ersten digitalen Daten zugeordnet ist, automatisch bestimmt wird;
Anpassen des Wertes des ersten Tokens basierend auf einer Änderung von mindestens einer der ersten subjektiven Gewichtung, der zweiten subjektiven Gewichtung, der dritten subjektiven Gewichtung oder der vierten subjektiven Gewichtung zum oder nahe dem ersten Zeitpunkt;
Erzeugen eines ersten digitalen Schlüssels, wobei der erste digitale Schlüssel unter Verwendung eines Algorithmus erzeugt wird, der sechste digitale Daten aus den ersten digitalen Daten, dem ersten Zeitpunkt und dem angepassten Wert des ersten Tokens herstellt, und wobei der erste digitale Schlüssel eine Zuordnung zu einem ersten Zeiger, einem zweiten Zeiger und einem dritten Zeiger einschließt, und wobei der erste digitale Schlüssel vom ersten Token isoliert ist, sodass eine digitale Übertragung oder ein digitaler Besitz des ersten digitalen Schlüssels den angepassten Wert des ersten Tokens nicht beeinflusst;
Speichern einer Kopie der sechsten digitalen Daten an einem ersten Speicherort in einer Datenbank, sodass die Kopie der sechsten digitalen Daten zusammen mit einer Kopie der ersten digitalen Daten, dem ersten Zeitpunkt und dem angepassten Wert des ersten Tokens basierend auf dem ersten Zeiger, dem zweiten Zeiger und dem dritten Zeiger vom ersten Speicherort in der Datenbank abgerufen werden kann;
Speichern einer Kopie der ersten digitalen Daten am zweiten Speicherort in der Datenbank;
Speichern des ersten Zeitpunkts an einem dritten Speicherort in der Datenbank;
Speichern des angepassten Werts des ersten Tokens an einem vierten Speicherort in der Datenbank;
Erzeugen des ersten Zeigers, wobei der erste Zeiger den ersten Speicherort in der Datenbank identifiziert und den ersten Speicherort in der Datenbank mit dem zweiten Speicherort in der Datenbank korreliert;
Erzeugen des zweiten Zeigers, wobei der zweite Zeiger den ersten Speicherort in der Datenbank mit dem dritten Speicherort in der Datenbank korreliert;
Erzeugen des dritten Zeigers, wobei der dritte Zeiger den ersten Speicherort in der Datenbank mit dem vierte Speicherort in der Datenbank korreliert;
Überprüfen der Echtheit des ersten digitalen Schlüssels unter Verwendung der Kopie der sechsten digitalen Daten, der Kopie der ersten digitalen Daten, des ersten Zeitpunkts und des angepassten Werts des ersten Tokens; und
Steuern der Übertragung des ersten digitalen Schlüssels und der Kopie der ersten digitalen Daten an einen ersten Benutzer.

9. System nach Anspruch 8, wobei der erste Zeiger dazu verwendet wird, die sechsten digitalen Daten und die ersten digitalen Daten zu lokalisieren.

10. System nach einem der Ansprüche 8-9, wobei der zweite Zeiger dazu verwendet wird, die sechsten digitalen Daten und den ersten Zeitpunkt zu lokalisieren.

11. Systems nach einem der Ansprüche 8-10, wobei der dritte Zeiger dazu verwendet wird, die sechsten digitalen Daten und den angepassten Wert des ersten Tokens zu lokalisieren.

12. Systems nach einem der Ansprüche 8-11, weiter umfassend weiteres Anpassen des Wertes des angepassten ersten Tokens basierend auf einer Änderung mindestens einer der ersten subjektiven Gewichtung, der zweiten subjektiven Gewichtung, der dritten subjektiven Gewichtung oder der vierten subjektiven Gewichtung zu oder nahe einem zweiten Zeitpunkt.

13. System nach Anspruch 12, weiter umfassend Übertragen eines Nettobarwerts basierend auf dem weiter angepassten Wert des angepassten ersten Tokens zum oder nahe dem zweiten Zeitpunkt basierend auf einem Austausch oder einer Einlösung des ersten digitalen Schlüssels durch den ersten Benutzer zum zweiten Zeitpunkt.

14. System nach einem der Ansprüche 8-13, wobei der Pool von Vermögenswerten ein Portfolio an geistigem Eigentum einschließt.

## Revendications

1. Procédé comprenant :
l'attribution (500) d'une valeur à un premier jeton représentant une première donnée numérique à un premier instant, via un processeur, dans lequel la valeur est automatiquement déterminée sur la base d'une première pondération subjective d'au moins deux parmi une deuxième donnée numérique représentant un ensemble d'actifs comprenant la première donnée numérique, une deuxième pondération subjective d'une troisième donnée numérique représentant la taille d'un marché comprenant la première donnée numérique, une troisième pondération subjective d'une quatrième donnée numérique associée à un ensemble de compétences d'une équipe de direction associée à la première donnée numérique, ou une quatrième pondération subjective d'une cinquième donnée numérique associée à un paysage concurrentiel associé à la première donnée numérique ;
l'ajustement (504) de la valeur du premier jeton sur la base d'une modification d'au moins une parmi la première pondération subjective, la deuxième pondération subjective, la troisième pondération subjective ou la quatrième pondération subjective au premier instant ou à proximité ;
la génération (506) via le processeur, d'une première clé numérique qui représente une sixième donnée numérique, dans lequel la première clé numérique est générée à l'aide d'un algorithme qui produit la sixième donnée numérique à partir de la première donnée numérique, du premier instant et de la valeur ajustée du premier jeton, dans lequel la première clé numérique inclut une association avec un premier pointeur, un deuxième pointeur et un troisième pointeur, et dans lequel la première clé numérique est isolée du premier jeton, de sorte qu'un transfert numérique ou une propriété numérique de la première clé numérique n'affecte pas la valeur ajustée du premier jeton ;
le stockage (508) d'une copie de la sixième donnée numérique dans un premier emplacement dans une base de données, de sorte que la copie de la sixième donnée numérique puisse être récupérée à partir du premier emplacement dans la base de données avec une copie de la première donnée numérique, le premier instant et la valeur ajustée du premier jeton étant générés sur la base du premier pointeur, du deuxième pointeur et du troisième pointeur ;
le stockage (510) d'une copie de la première donnée numérique dans le deuxième emplacement de la base de données;
le stockage (512) du premier instant dans un troisième emplacement de la base de données;
le stockage (514) de la valeur ajustée du premier jeton dans un quatrième emplacement de la base de données ;
la génération (516), via le processeur, du premier pointeur, dans lequel le premier pointeur identifie le premier emplacement dans la base de données et met en corrélation le premier emplacement dans la base de données avec le deuxième emplacement dans la base de données ;
la génération (518), via le processeur, du deuxième pointeur, dans lequel le deuxième pointeur met en corrélation le premier emplacement dans la base de données avec le troisième emplacement dans la base de données ;
la génération (520), via le processeur, du troisième pointeur, dans lequel le troisième pointeur met en corrélation le premier emplacement dans la base de données avec le quatrième emplacement dans la base de données;
la vérification (528) de l'authenticité de la première clé numérique en utilisant la copie de la sixième donnée numérique, la copie de la première donnée numérique, le premier instant et la valeur ajustée du premier jeton ; et
la commande (526) du transfert de la première clé numérique et de la copie de la première donnée numérique à un premier utilisateur.

2. Procédé selon la revendication 1, dans lequel le premier pointeur est utilisé pour localiser la sixième donnée numérique et la première donnée numérique.

3. Procédé selon l'une des revendications 1-2, dans lequel le deuxième pointeur est utilisé pour localiser la sixième donnée numérique et le premier instant.

4. Procédé selon l'une des revendications 1-3, dans lequel le troisième pointeur est utilisé pour localiser la sixième donnée numérique et la valeur ajustée du premier jeton.

5. Procédé selon l'une des revendications 1-4, comprenant en outre l'ajustement supplémentaire de la valeur du premier jeton ajusté sur la base d'une modification d'au moins une parmi la première pondération subjective, la deuxième pondération subjective, la troisième pondération subjective ou la quatrième pondération subjective au deuxième instant ou à proximité.

6. Procédé selon la revendication 5, comprenant en outre le transfert d'une valeur actuelle nette au premier utilisateur sur la base de la valeur ajustée du premier jeton au deuxième instant ou à proximité, sur la base d'un échange ou d'un rachat de la première clé numérique par le premier utilisateur au deuxième instant.

7. Procédé selon l'une des revendications 1-6, dans lequel le groupe d'actifs inclut un portefeuille de propriété intellectuelle.

8. Système, comprenant :
un serveur, incluant un microprocesseur, une mémoire et une base de données, dans lequel une première donnée numérique est stockée dans la base de données, et dans lequel la mémoire inclut des instructions qui amènent le microprocesseur à :
attribuer une valeur à un premier jeton représentant la première donnée numérique à un premier instant, dans lequel la valeur est automatiquement déterminée sur la base d'une première pondération subjective d'au moins deux parmi une deuxième donnée numérique représentant un ensemble d'actifs comprenant la première donnée numérique, une deuxième pondération subjective d'une troisième donnée numérique représentant la taille d'un marché comprenant la première donnée numérique, une troisième pondération subjective d'une quatrième donnée numérique représentant un ensemble de compétences d'une équipe de direction associée à la première donnée numérique, ou une quatrième pondération subjective d'une cinquième donnée numérique associée à un paysage concurrentiel associé à la première donnée numérique ;
ajuster la valeur du premier jeton sur la base d'une modification d'au moins une parmi la première pondération subjective, la deuxième pondération subjective, la troisième pondération subjective ou la quatrième pondération subjective au premier instant ou à proximité ;
générer une première clé numérique, dans lequel la première clé numérique est générée à l'aide d'un algorithme qui produit une sixième donnée numérique à partir de la première donnée numérique, du premier instant et de la valeur ajustée du premier jeton, et dans lequel la première clé numérique inclut une association avec un premier pointeur, un deuxième pointeur et un troisième pointeur, et dans lequel la première clé numérique est isolée du premier jeton, de sorte qu'un transfert numérique ou une propriété numérique de la première clé numérique n'affecte pas la valeur ajustée du premier jeton ;
stocker une copie de la sixième donnée numérique dans un premier emplacement dans une base de données, de sorte que la copie de la sixième donnée numérique puisse être récupérée à partir du premier emplacement dans la base de données avec une copie de la première donnée numérique, le premier instant et la valeur ajustée du premier jeton étant générés sur la base du premier pointeur, du deuxième pointeur et du troisième pointeur ;
stocker une copie de la première donnée numérique dans le deuxième emplacement de la base de données ;
stocker le premier instant dans un troisième emplacement de la base de données ;
stocker la valeur ajustée du premier jeton dans un quatrième emplacement de la base de données ;
générer le premier pointeur, dans lequel le premier pointeur identifie le premier emplacement dans la base de données et met en corrélation le premier emplacement dans la base de données avec le deuxième emplacement dans la base de données ;
générer le deuxième pointeur, dans lequel le deuxième pointeur met en corrélation le premier emplacement dans la base de données avec le troisième emplacement dans la base de données ;
générer le troisième pointeur, dans lequel le troisième pointeur met en corrélation le premier emplacement dans la base de données avec le quatrième emplacement dans la base de données ;
vérifier l'authenticité de la première clé numérique en utilisant la copie de la sixième donnée numérique, la copie de la première donnée numérique, le premier instant et la valeur ajustée du premier jeton ; et
commander le transfert de la première clé numérique et de la copie de la première donnée numérique à un premier utilisateur.

9. Système selon la revendication 8, dans lequel le premier pointeur est utilisé pour localiser la sixième donnée numérique et la première donnée numérique.

10. Système selon l'une des revendications 8-9, dans lequel le deuxième pointeur est utilisé pour localiser la sixième donnée numérique et le premier instant.

11. Système selon l'une des revendications 8-10, dans lequel le troisième pointeur est utilisé pour localiser la sixième donnée numérique et la valeur ajustée du premier jeton.

12. Système selon l'une des revendications 8-11, comprenant en outre l'ajustement supplémentaire de la valeur du premier jeton ajusté sur la base d'une modification d'au moins une parmi la première pondération subjective, la deuxième pondération subjective, la troisième pondération subjective ou la quatrième pondération subjective au deuxième instant ou à proximité.

13. Système selon la revendication 12, comprenant en outre le transfert d'une valeur actuelle nette sur la base de la valeur ajustée du premier jeton ajusté au deuxième instant ou à proximité, sur la base d'un échange ou d'un rachat de la première clé numérique par le premier utilisateur au deuxième instant.

14. Système selon l'une des revendications 8-13, dans lequel le groupe d'actifs inclut un portefeuille de propriété intellectuelle.
